# EUROPEAN PATENT APPLICATION

(11) **EP 2 314 793 A1**
(43) Date of publication of application: **27.04.2011**
(21) Application number: 10186543.4
(22) Date of filing: 05.10.2010
(51) Int. Cl.: E04F 11/18, F16B 7/04, E06B 3/00

(54) **Means for interconnecting two abutting profiles into different mutual angular positions, in particular for balcony glazing systems, railing systems or the like**

(30) Priority: 19.10.2009 FI 20096074
(71) Applicant: Nika-Lasitus OY, 04320 Tuusula (FI)
(72) Inventor: Murto, Jani, 00670 Helsinki (FI)
(74) Representative: LEITZINGER OY

(57) **Abstract**

The invention relates to a connecting means for interconnecting longitudinal profile components (7, 7') in an abutting manner. The connecting means comprises an attaching part (1, 1') to be fitted inside each profile component to be connected. The connecting means is made articulated so that the same connecting means will be suitable for interconnecting profile components connected into different mutual angular positions.

## Description

The present invention relates to a connecting means for interconnecting longitudinal profile components in an abutting manner, the connecting means comprising an attaching part to be fitted inside each profile component to be connected.

The aim of the present invention is to provide a connecting means applicable to extending various elongated profile components, especially the upper and lower profile rails of balcony glazing, by abutment joints, particularly into different mutual angular positions. Fixed connecting means have previously been used for extending the profile rails of balcony glazing into certain angular positions, for example 45° or 90°, which means that a separate connecting means has been required for each angular position desired. Furthermore, the upper profile rails and lower profile rails normally differ from one another in that each one requires a different connecting means, which means that, for example, for three different angular positions, there must always be six different fixed connecting means in stock. Especially at renovation sites, the angles may in addition differ from these standard angles, in which case individual connecting means have to be made in order to provide the angular position desired. This type of connecting means is required especially when the profiles cannot be attached to the framework in the vicinity of the point of connection in question. The aim of the present invention is, therefore, to provide an improved connecting means by means of which the said problems can be minimised. To achieve this aim, the method according to the invention is characterised in that the connecting means is made articulated so that the same connecting means will be suitable for interconnecting profile components connected into different mutual angular positions.

The connecting means according to the invention is comprised of two separate attaching parts which are interconnectable by means of a snap joint, in such a way that they are able to turn about an axis which is essentially perpendicular to the longitudinal central axis of the profile components.

One particularly preferred embodiment is such that the connecting means is comprised of two essentially identical attaching parts which are interconnectable in a reversed image manner.

When using such identical attaching parts that are interconnected in a reversed image manner, a connecting means is obtained, by using which only one part is required to be kept in stock for each profile form, and a connecting means making possible the desired angular position is always available by snap joining them together in a reversed image manner.

In addition to being used in different types of balcony and terrace glazing profile rails, the connecting means according to the invention is also applicable to the abutment joints of other types of wall element profile rails. It may conceivably also be used for other types of elongated profile components, such as the abutment joints of profile rails in a railing system.

The invention is described in greater detail in the following, with reference to the accompanying drawings, in which:
- Figure 1: shows a top view of a preferred embodiment of a part of the connecting means according to the invention,
- Figure 2: shows a side view of the embodiment of Figure 1,
- Figure 3: shows the embodiment of Figure 1, as seen from the end,
- Figure 4: shows a perspective view of the embodiment of Figure 1,
- Figure 5: shows the interconnection of the parts of the connecting means,
- Figure 6: shows the interconnection of two parts of the connecting means according to Figure 1 in a position allowing a straight extension,
- Figure 7: shows the mutual turning of the parts of the connecting means about the pivoting axis,
- Figure 8: shows a top view of a cornerwise interconnection of two profile rails by means of the connecting means according to the invention, and
- Figure 9: shows an end view of a profile rail provided with a connecting means part according to Figure 1.

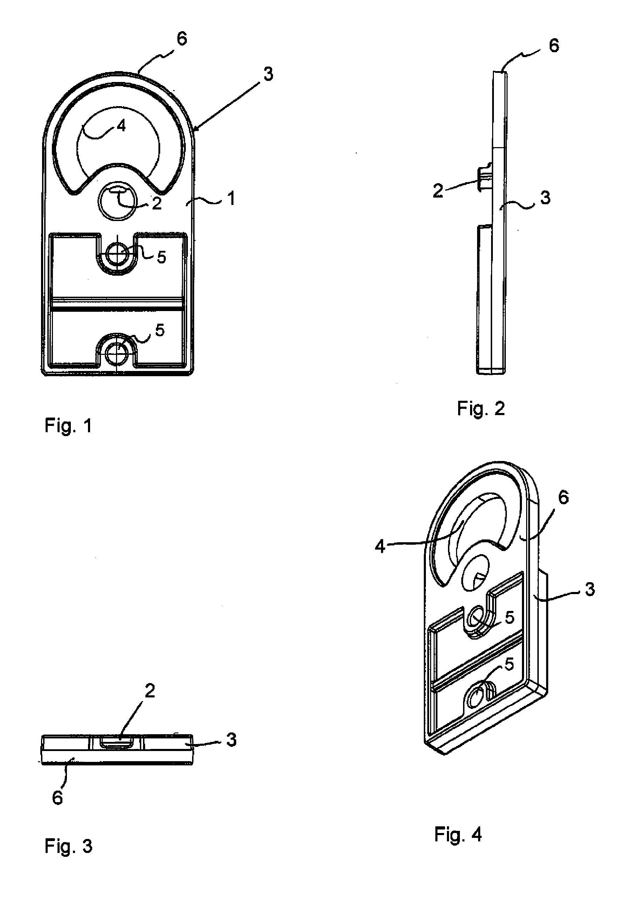

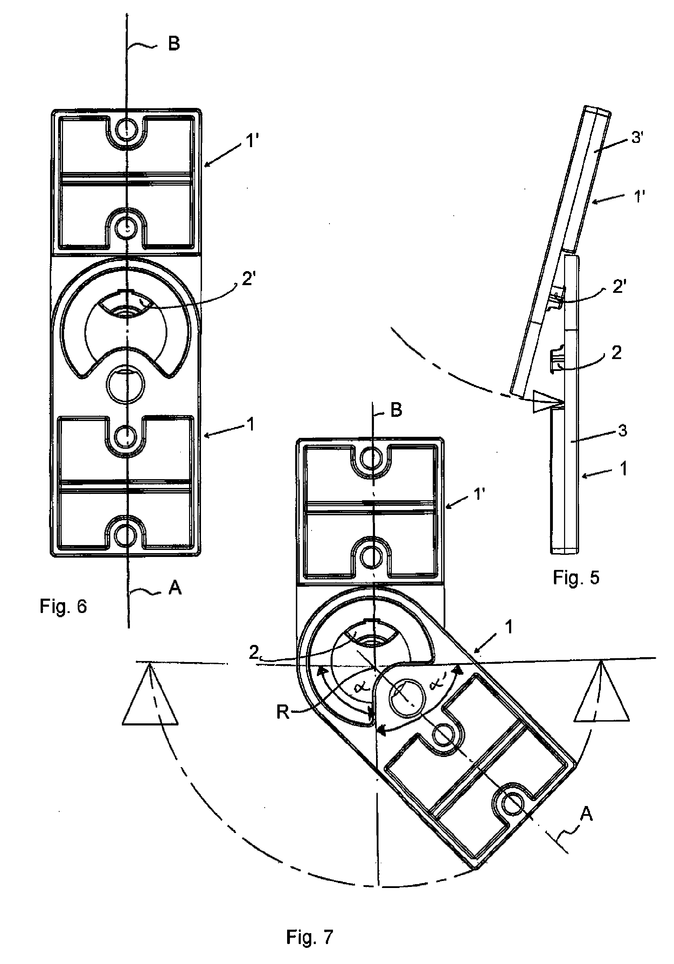

Figures 1 to 4 show a diagrammatic example of a attaching part 1 of the connecting means according to the invention, which is intended to be connected to an identical part 1' of the connecting means, as shown in Figure 5. The attaching part 1 comprises a framework 3, in which is formed a thinner end region 6 with a guide hole 4. In conjunction with the guide hole in the end part 6 is also formed a snap locking means 2 in such a way that when the two attaching parts 1, 1' are placed against each other in a reversed image manner and pushed into contact with one another, the snap locking means 2 are locked on the other side of the guide hole 4 of the opposite connecting part. Figure 5 illustrates the formation of a snap lock. In this way is obtained a connecting means which can be turned about the pivoting axis, denoted by reference mark R in Figure 7, to the desired angular position. In Figure 6, the interconnected parts 1, 1' of the connecting means are shown in a position in which the profile rails (not shown) to be connected in an abutting manner form an essentially straight extension, whereupon the longitudinal central axes A, B of the connecting parts are essentially joined. Figure 7 shows the interconnected parts 1, 1' of the connecting means when turned into a position which makes a mutual corner joint possible. The parts of the connecting means are preferably designed so as to allow their mutual turning with respect to the longitudinal centre line, denoted by reference mark B in Figures 6 and 7, clockwise within range α (0-135°) and anti-clockwise within range α' (0-135°).

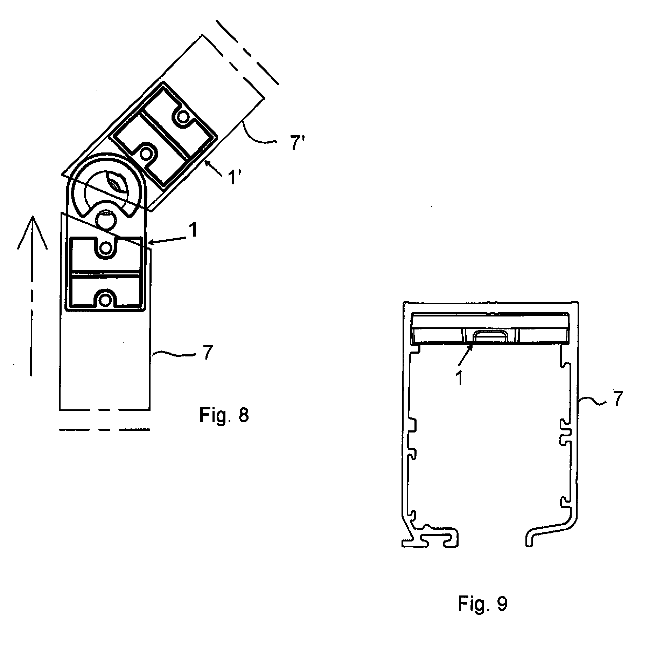

Figure 8 shows diagrammatically two profile rails 7, 7' to be interconnected, inside the abutting ends of which are fitted attaching parts 1, 1', respectively. The attaching parts 1, 1' are snapped into each other and the profile rails are placed against one another in accordance with the mitre angle formed in them, after which the attaching parts can be locked in their respective profile rails with fixing screws (not shown) or other suitable fixing means, such as rivets, through the mounting holes 5. Figure 9 shows an enlarged view from the end of a profile rail 7 to which a attaching part 1 of the invention has been fitted.

The attaching parts 1, 1' may conceivably also be realised in such a way that a separate locking means is used to interlock them, for example, a locking pin extending through the holes 4 disclosed in the above embodiments, but this increases the number of parts used and is more difficult to fit.

## Claims

1. A connecting means for interconnecting longitudinal profile components (7, 7') in an abutting manner, the connecting means comprising an attaching part (1, 1') to be fitted inside each profile component to be connected, **characterised in that** the connecting means is made articulated so that the same connecting means will be suitable for interconnecting profile components connected into different mutual angular positions.

2. A connecting means as claimed in claim 1, **characterised in that** the connecting means is comprised of two separate attaching parts (1, 1') which are interconnectable in such a way that they are able to turn about an axis which is essentially perpendicular to the longitudinal central axis of the profile components.

3. A connecting means as claimed in claim 2, **characterised in that** the connecting means is comprised of two essentially identical attaching parts (1, 1') which can be interconnected in a reversed image manner.

4. A connecting means as claimed in any of the claims 1-3, **characterised in that** the attaching parts are arranged to be directly interconnected by means of a snap joint.

5. A connecting means as claimed in any of the claims 1-3, **characterised in that** the attaching parts are arranged to be directly interconnected by means of a separate locking means.

6. The use of the connecting means as claimed in any of the claims 1-5 in the abutment joints of the upper and/or lower profile rails of terrace, balcony, railing or similar systems.
